# EUROPEAN PATENT APPLICATION

(11) **EP 1 371 282 A1**
(43) Date of publication of application: **17.12.2003**
(21) Application number: 03425354.2
(22) Date of filing: 04.06.2003
(51) Int. Cl.: A01G 17/14, E04H 17/12

(54) **Outdoor pole**

(30) Priority: 11.06.2002 IT MI20021283
(71) Applicant: Videoplastic S.p.A., 24060 Gorlago (BG) (IT)
(72) Inventor: Corna, Claudio, 24069 Trescore Balneario BG (IT); Zucchinali, Marcello, 24122 Bergamo BG (IT)
(74) Representative: Pizzoli, Antonio

(57) **Abstract**

A pole comprising an elongated body (1), which is provided with at least one point (2) suitable for being inserted into the ground and has a cross-shaped cross-section comprising at least two flat bars (1a, 1b) mutually joined along a longitudinal axis, the first bar (1a) comprising at least one seat (8) in which a wire (9) can be placed, and the second bar (1b) being provided with at least two further seats (7, 7') for the wire (9), between which the first bar (1a) is arranged.

## Description

The present invention relates to an outdoor pole, and particularly to a plastic which can be used as a stake for buckhoms or other climbing plants.

US patent 1399426 describes an outdoor pole with a T-shaped cross-section, which comprises at least one point to be inserted into the ground and a plurality of seats wherein fencing wires can be arranged. Since it is made of iron, this known pole is relatively difficult and expensive to be manufactured, as well as less resistant to atmospheric agents.

To overcome these drawbacks, IT patent 1298959 in the name of the same applicant discloses an outdoor pole which comprises an elongated rigid core drowned in a plastic coating which covers the lateral surfaces and both ends thereof. Besides the seats for the wires, this known pole comprises also seats for irrigations pipes, in order to be employed in cultivations, particularly in vineyards.

However, even this known pole is relatively expensive and difficult to be manufactured, especially when its particular sturdiness is not required, for example when it has a small size, as the stakes for buckhoms. Furthermore, in this last case, the known pole is not appropriate because it allows the slipping of the wires, which instead should be blocked when they are taut.

The object of the present invention is therefore to provide a pole free from these drawbacks. Said object is achieved through a pole whose main features are specified in claim 1 and other features are specified in subsequent claims.

By virtue of the particular seats thereof, the pole according to the present invention can hold one or more wires without letting them slip when they are taut, but allowing their slipping and/or extraction when they are not taut, so that it can be excellently used as a stake for buckhoms or other climbing plants. As a matter of fact, the pole according to the present invention preferably comprises seats arranged on different levels, in order to easily lift upwards the wires of the cultivations according to their growth.

Furthermore, these seats allow the insertion of wires with different diameters, the hold of the seat being proportional to the diameter of the wire inserted therein.

According to an advantageous aspect of the invention, the pole is provided with ribs, fins and other members which make its structure firmer with a minimum addition of material.

According to another advantageous aspect of the invention, the seats for the wires and, if any, also for the irrigation pipes, are provided with particular teeth for hooking them.

According to a further advantageous aspect of the invention, means suitable for indicating the orientation thereof are arranged on the pole, in order to simplify the insertion into the ground.

Finally, the pole according to the present invention is easy and cheap to be manufactured in a single piece of plastic material, since it can be moulded by injection already in its final shape.

Further advantageous and features of the pole according to the present invention will be clear to those skilled in the art from the following detailed and non-limiting description of one embodiment thereof with reference to the attached drawing wherein:
- figure 1 shows a front view of the pole according to this embodiment;
- figure 2 shows a rear view of the pole of figure 1;
- figure 3 shows a right lateral view of the pole of figure 1;

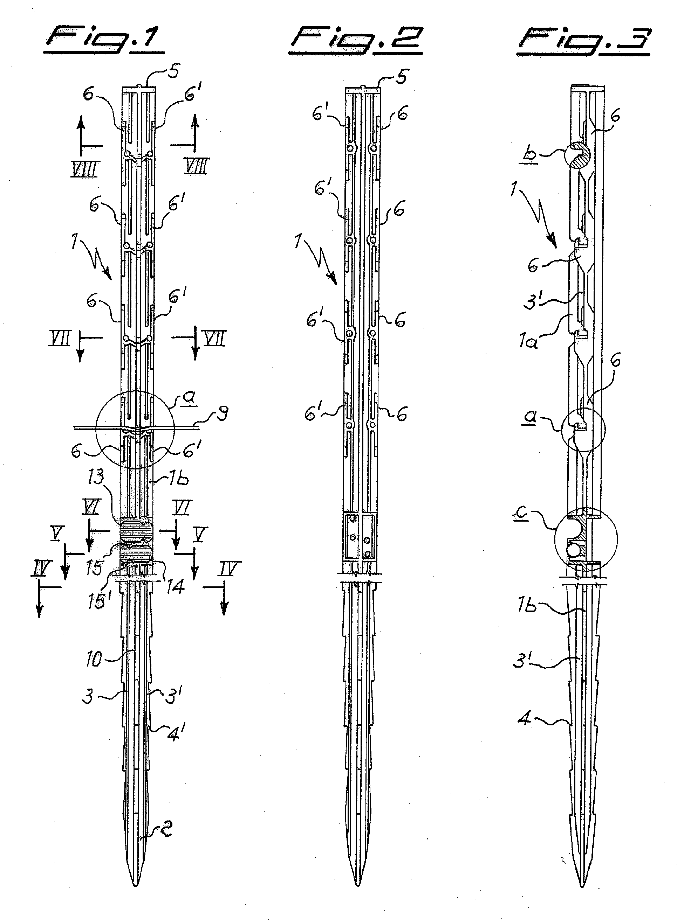

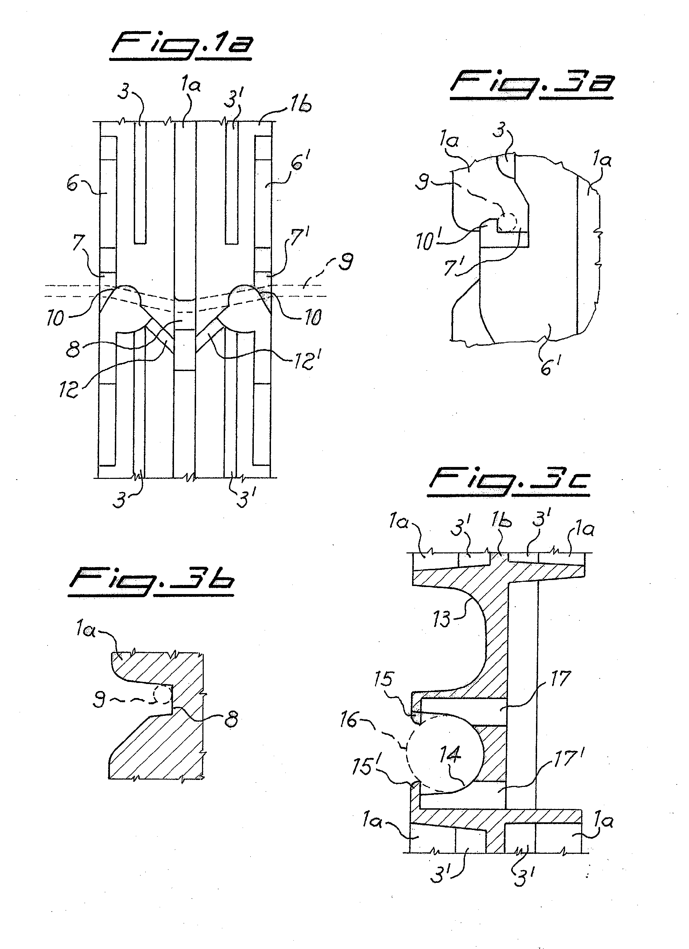

- figure 1a shows an enlarged partial view of detail a of the pole of figure 1;

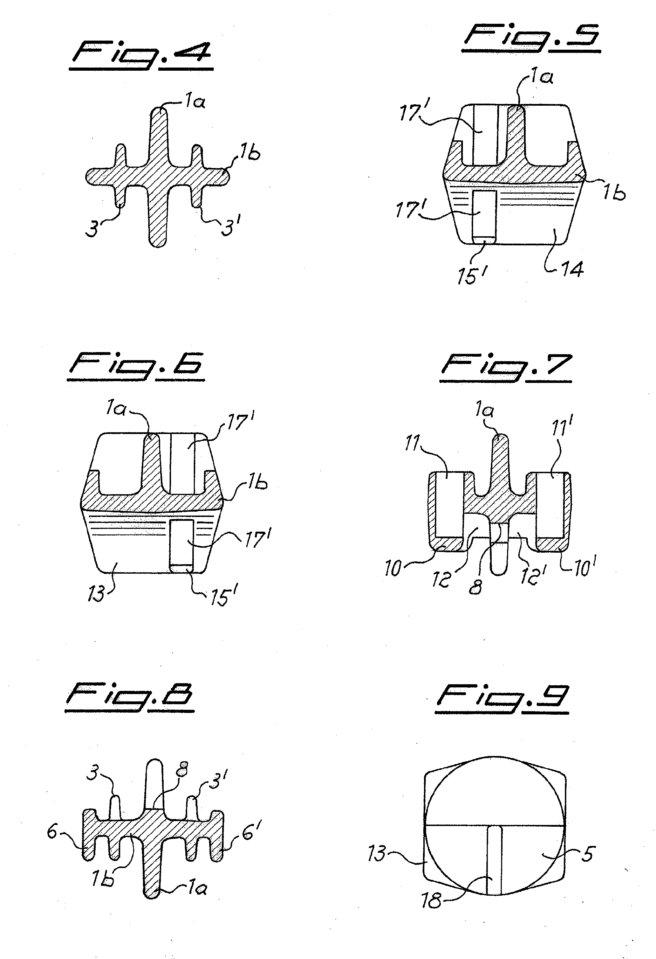

- figure 3a shows an enlarged partial view of detail a of the pole of figure 3;
- figure 3b shows an enlarged partial sectional view of detail b of the pole of figure 3;
- figure 3c shows an enlarged partial sectional view of detail c of the pole of figure 3;
- figure 4 shows a sectional view according to plane IV-IV of the pole of figure 1;
- figure 5 shows a sectional view according to plane V-V of the pole of figure 1;
- figure 6 shows a sectional view according to plane VI-VI of the pole of figure 1;
- figure 7 shows a sectional view according to plane VII-VII of the pole of figure 1;
- figure 8 shows a sectional view according to plane VIII-VIII of the pole of figure 1; and
- figure 9 shows a top view of the pole of figure 1.

Referring to those figures, it is seen that the pole according to the present embodiment of the invention comprises in a known way an elongated body 1, which is provided with at least one point 2 suitable for being inserted into the ground and is preferably manufactured in a single piece of plastic material moulded by injection.

With particular reference to figures 4 and 8, it is seen that the elongated body 1 has a cross-shaped cross-section comprising at least two flat bars 1a, 1b which are mutually joined along a longitudinal axis, in particular their central longitudinal axis, and have the edges preferably rounded. The elongated body 1 preferably includes also one or more pairs of longitudinal ribs 3, 3' which are joined to at least one of the flat bars, for example bar 1a, which is substantially perpendicular to bar 1b and to ribs 3, 3'. Bars 1a e 1b are provided with a plurality of teeth 4, 4' on point 2, in order to prevent the pole from longitudinally moving when it is hammered into the ground. For this purpose, teeth 4 of bar 1a are preferably turned downwards. The lower ends of bars 1a, 1b and of ribs 3, 3' are tapered to form point 2, while their upper ends are joined to a transversal member 5, for example circularly shaped. Bar 1b comprises one or more pairs, particularly four pairs, of fins 6, 6' substantially perpendicular to bar 1a, which is therefore arranged between the two fins 6, 6' of a pair.

With particular reference to figures 1a, 3a, 3b, 7 and 8, it is seen that according to the invention, fins 6, 6' and bar 1a are suitably provided with at least one notch 7, 7' and 8 acting as a seat in which a wire 9 (shown with a broken line in figures 1a, 3a e 3b) can be placed. Seat 8 of bar 1a is not arranged along the axis which connects seats 7, 7' of fins 6, 6', so that wire 9 forms a small bend when placed into seats 7, 7' and 8. Particularly, seat 8 of bar 1a is slightly lower than seats 7, 7' of fins 6, 6', so that said bend is turned downwards. Ribs 3, 3' are preferably interrupted by transversal grooves next to seats 7, 7' and 8, in such a way to not obstruct wire 9. In order to hook wire 9, seats 7, 7' are provided with at least one tooth 10, 10' which protrudes in front of them, in particular upwards if seat 8 is lower than seats 7, 7', that is on the side opposite to seat 8. In order to obtain teeth 10, 10' during the plastic molding, a hole 11, 11', for example cylindrically or slightly frustoconically shaped, which crosses bar 1b can be made behind them. By this arrangement, teeth 10, 10' have a cross-section substantially equal to the cross-section of holes 11, 11', for example circularly shaped. In the present embodiment of the invention, teeth 10, 10' are joined to fins 6, 6', as well as to ribs 3, 3' and to bar 1a, in this last case by means of two ribs 12, 12'. In other embodiments of the invention teeth 10, 10' may be joined only to one or two of the above mentioned members.

With particular reference to figures 3c, 5 and 6, it is seen that the elongated body 1 of the pole according to the present embodiment of the invention can also include one or more transversal seats 13, 14, preferably with different diameters, in order to house pipes, for example irrigation pipes. Seats 13, 14 can have a substantially semicylindrical shape and be provided with two or more teeth 15, 15' which protrude in front of them, so as to hook the pipe housed therein (one pipe 16 is shown in figure 3c with a broken line). Also to obtain teeth 15, 15' during the plastic molding, a hole 17, 17', for example cylindrically or slightly frustoconically shaped, which crosses bar 1b can be made behind them. By this arrangement, teeth 15, 15' have a cross-section substantially equal to the cross-section of holes 17, 17', for example circularly shaped.

Finally, referring to figure 9, it is seen that upon elongated body 1 is arranged a relief 18 acting as an indicator of the orientation of the pole. In particular, relief 18 is parallel to bar 1a and is turned toward the front portion of the elongated body 1.

## Claims

1. A pole comprising an elongated body (1), which is provided with at least one point (2) suitable for being inserted into the ground and has a cross-shaped cross-section comprising at least two flat bars (1a, 1b) mutually joined along a longitudinal axis, the first bar (1a) comprising at least one seat (8) in which a wire (9) can be placed, **characterized in that** the second bar (1b) is provided with at least two further seats (7, 7') for the wire (9), between which the first bar (1a) is arranged.

2. A pole according to claim 1, **characterized in that** the seat (8) of the first bar (1a) is not arranged along the axis which connects the seats (7, 7') of the second bar (1b) so that the wire (9) forms a bend when placed into these seats (7, 7' and 8).

3. A pole according to claim 2, **characterized in that** the seat (8) of the first bar (1a) is arranged lower than the seats (7, 7') of the second bar (1b), so that the bend of the wire (9) is turned downwards.

4. A pole according to one of the previous claims, **characterized in that** the seat (8) of the first bar (1a) consists of a notch made therein.

5. A pole according to one of the previous claims, **characterized in that** at least one bar (1a) is provided with one or more pairs of ribs (3, 3').

6. A pole according to one of the previous claims, **characterized in that** the second bar (1b) comprises one or more pairs of fins (6, 6') separated by the first bar (1a).

7. A pole according to claim 6, **characterized in that** the seats (7, 7') of the second bar (1b) consists of a notch made in the fins (6, 6').

8. A pole according to one of the previous claims, **characterized in that** the seats (7, 7') of the second bar (1b) are provided with at least one tooth (10, 10') which protrudes in order to hook the wire (9).

9. A pole according to claim 8, **characterized in that** said tooth (10, 10') protrudes from the side opposite to the seat (8) of the first bar (1a).

10. A pole according to claim 8 or 9, **characterized in that** a hole (11,11') which crosses the second bar (1b is made behind said tooth (10, 10').

11. A pole according to one of the claims from 8 to 10, **characterized in that** said tooth (10, 10') is joined to a fin (6, 6'), to a rib (3, 3') and/or to the first bar (1a).

12. A pole according to claim 11, **characterized in that** said tooth (10, 10') is joined to the first bar (1a) by means of a rib (12, 12').

13. A pole according to one of the previous claims, **characterized in that** the bars (1a, 1b) are provided with a plurality of teeth (4, 4') on the point (2), the teeth (4) of a bar (1a) being turned upwards and the teeth (4) of the other bar (1b) being turned downwards.

14. A pole according to one of the previous claims, **characterized in that** said elongated body (1) includes one or more seats (13, 14) for housing pipes (16).

15. A pole according to claim 14, **characterized in that** said seats (13, 14) have a substantially semicylindrical shape and are provided with two or more teeth (15, 15') which protrude for hooking a pipe (16).

16. A pole according to claim 15, **characterized in that** a hole (17, 17') which crosses the second bar (1b) is made behind said teeth (15, 15').

17. A pole according to one of the previous claims, **characterized in that** means (18) for indicating the orientation of the pole are arranged on the elongated body (1).

18. A pole according to claim 17, **characterized in that** said means (18) for indicating the orientation of the pole comprise a relief (18) parallel to the first bar (1a) and turned toward the front portion of the elongated body (1).

19. A pole according to one of the previous claims, **characterized in that** it is made of a single piece of plastic material.

20. A pole according to claim 19, **characterized in that** it is made of a single piece of plastic material moulded by injection.
